# EUROPEAN PATENT SPECIFICATION

(11) **EP 2 185 048 B1**
(45) Date of publication and mention of the grant of the patent: **04.04.2012**
(21) Application number: 08829036.6
(22) Date of filing: 05.09.2008
(51) Int. Cl.: A47J 36/02

(54) **INDUCTION COOKWARE**
INDUKTIONSKOCHGESCHIRR
USTENSILE DE CUISINE À INDUCTION

(30) Priority: 07.09.2007 US 970795 P; 07.09.2007 US 970766 P; 07.09.2007 US 970775 P; 07.09.2007 US 970785 P; 14.02.2008 US 31206; 14.02.2008 US 31214; 14.02.2008 US 31220; 14.02.2008 US 31226
(43) Date of publication of application: 19.05.2010
(73) Proprietor: Bose Corporation, Framingham, Massachusetts 01701 (US)
(72) Inventor: ENGLAND, Raymond O., Harrisville, Rhode Island 02830 (US); FROESCHLE, Thomas A., Southborough, Massachusetts 01772 (US); BEVERLY, David W., Lunenburg, Massachusetts 01462 (US)
(74) Representative: Brunner, Michael John
(86) International application number: PCT/US2008/075339
(87) International publication number: WO 2009/032979

(56) References cited:
- DE-A1- 10 019 968
- DE-U1-202005 010 652
- GB-A- 1 522 383
- JP-A- 2003 275 097

## Description

### TECHNICAL FIELD

This disclosure relates to cookware for induction cooktops.

### BACKGROUND

Some conventional cooktops deliver heat to a cooking utensil (e.g., a pan, pot, skillet, etc.) by for example a gas flame or electric resistance coil. In these cooktops, any material that lies between the heat source and the cooking utensil (e.g., a glass cooktop) is also heated. Induction cooktops work differently. In an induction cooktop, an alternating current in an induction coil produces a time dependent magnetic field that induces eddy currents in electrically conductive materials near the coil, such as a ferromagnetic component (or the target material) of induction cooking utensils. As eddy currents flow within the target material, it becomes hot via a joule heating mechanism. Heat in the target is conducted through the body of the cooking utensil to the food surface, and the food is cooked. Unlike gas or electric cooktops, induction cooktops will not directly heat non-conductive materials (such as a glass cooktop) that are placed between the induction coil and the target material. However, any such non-conductive materials placed between the induction coil and the target material may be indirectly heated by the radiant, convective, or conductive heat emanating from the hot target material.

GB 1522383 discloses a cooking utensil for use with an induction cooktop having an induction heating coil, the cooking utensil comprising an inner wall comprising an electrically conductive material; an outer wall comprising an electrically non-conductive material configured to be positioned between the inner wall and the induction heating coil during operation of the induction heating coil; and an electrically conductive reflective layer positioned between the inner wall and outer wall.

### SUMMARY

The present invention is characterised over GB 1522383 in that the reflective layer has breaks formed in the conductive material of the reflective layer to interrupt a path of a current flow induced in the conductive material.

Implementations may include one or more of the following. The reflective layer may be formed on the inner surface of the outer wall and the outer surface of the inner wall. The reflective layer may also be a separate layer that lies between the inner and outer walls. In some applications, a layer of thermally resistant material, such as aerogel, may also be placed between the inner and outer walls; the reflective layer may be attached to this layer of thermally resistant material. The reflective layer may cover the bottom portion and/or side wall portion of the cooking utensil. The thickness of the reflector may be less than its skin depth and/or current interruptions may be etched (or otherwise formed) in the reflector. The cooking utensil may include multiple layers of reflectors and thermally resistant material may be disposed between these multiple layers.

The inner wall of the cooking utensil may include multiple layers of material (e.g., stainless steel and/or aluminum). The inside of the inner wall may include a non-stick coating material. The inner wall may be the innermost wall of the cooking utensil.

The outer wall may be formed of an insulating material. The outer wall may be also formed of different materials, such as one type of material (or combination of materials) for the sidewalls of the cooking utensil (e.g., metal) and another type of materials (or combination of materials) for the bottom portion of the utensil (e.g., a non-conductive window). The outer wall may be the outermost wall of the cooking utensil.

The cooking utensil may be constructed such that there is a gap between the inner and outer walls. In some implementations, a vacuum may be formed within the gap. The vacuum may be formed within the entire gap itself, or an evacuated structure (e.g., a piece of thermally resistant material such as aerogel vacuum-sealed between two sheets of material) may be disposed within the gap. One or both of these sheets of material may be a reflective material. A getter material may be disposed within the vacuum gap to create, preserve or increase the magnitude of the vacuum.

A vacuum-sealed thermal insulator may be disposed between the walls. Implementations may include one or more of the following. The vacuum-sealed insulator may be a thermal insulator (e.g., aerogel) that is vacuum-sealed between two sheets of material. One or both of the sheets of material may be a reflector.

Implementations may include one or more of the following. The getter material may be heat activated and may have an activation temperature within the normal range of the cooking utensil (e.g., about 100 and 275°C), or it may be activated at higher temperatures (e.g., about 350 and 500°C.). The vacuum may be formed within the entire gap itself, or a vacuum-sealed thermally resistant material (e.g., aerogel vacuum-sealed between two sheets of material) may be disposed within the gap. The getter material may be disposed within the vacuum gap to create, preserve or increase the magnitude of the vacuum.

The outer wall of the cooking utensil may in some cases consist entirely of an electrically insulating material. The outer wall may be also formed of different materials, such as one type of material (or combination of materials) for the sidewalls of the cooking utensil (e.g., metal) and another type of materials (or combination of materials) for the bottom portion of the utensil (e.g., a non-conductive window). The outer wall may be the outermost wall of the cooking utensil.

The inner wall of the cooking utensil may include multiple layers of material (e.g., stainless steel and/or aluminum). The inside of the inner wall may include a non-stick coating material. The inner wall may be the innermost wall of the cooking utensil.

Implementations may include one or more of the following. The electrically non-conductive material of the bottom portion may have an electrical resistivity of greater than about one ohm-meter. The sidewall portion of the outer wall may also include a layer of non-conductive (e.g., insulating) material. The bottom portion of the outer wall may consist entirely of a non-conductive material. The inner wall may be the inner most wall and the outer wall may be the outer most wall.

There may be a gap, such as a vacuum gap, separating the inner and outer walls. And there may be a getter material (e.g., to preserve a vacuum gap) between the inner and outer walls. The reflective layer may be formed on the inner surface of the outer wall, or may be a separate layer. The reflective layer may cover only the bottom portion of the pan or it may cover the entire shell of the pan. A layer of thermally resistant material such as aerogel may separate the inner wall and the reflective layer or the outer wall and the reflective layer. The cooking utensil may include multiple layers of reflective material.

Generally, in another aspect, a cooking utensil (such as a stock pot, frying pan, sauce pan, or other type of cookware) for use with an induction cooktop is constructed such that it heats the food/liquid within its chamber to a desired cooking temperature while maintaining a relatively cool outer surface, and preferably an outer surface that is cool enough to pick up with a person's bare hands and immediately set on a wooden (or other) table without damaging it.

The inner wall may be formed of multiple layers (e.g., stainless steel, aluminum, etc.). The outside of the inner layer may include a coating of a non-stick material. The inner wall may be the innermost wall of the cooking utensil.

### BRIEF DESCRIPTION OF THE DRAWINGS

FIGS. 1A and 2 are cross-sectional views of induction cookware.

FIG. 1 B is a detailed cross-sectional view of a portion of the cooking utensil shown in FIG. 1A.

FIGS. 3A-3B are partial cross-sectional views of an inner wall of an induction cooking utensil.

FIG. 4A is a cross-sectional view an induction cooking utensil.

FIG. 4B is a bottom view of the cooking utensil shown in FIG. 4A.

FIGS. 5A and 5C are each a cross-sectional view of an induction cooking utensil.

FIGS. 5B and 5D are each a detailed cross-sectional view of a portion of the cooking utensil shown in FIGS. 5A and 5C respectively.

FIG. 6A is a perspective view of an induction cooking utensil.

FIG. 6B is a bottom view of the cooking utensil shown in FIG. 6A.

FIG. 6C is a cross sectional view of the cooking utensil shown in FIGS. 6A-6B.

### DETAILED DESCRIPTION

Cookware used with an induction cooktop may be designed to rapidly heat food or liquid while maintaining an outer surface that is cool enough to handle with bare hands or directly place on a wooden dining table (or other heat sensitive surface) without causing damage. To do this, the cookware should be constructed in a way so that any component between the induction coil and the target allows the magnetic field produced by the induction coil to reach the target (that is the component should be essentially invisible to the magnetic field) and also have a high thermal resistance (to abate radiant, convective, and conductive heat transfer from the target material to the outside of the cookware).

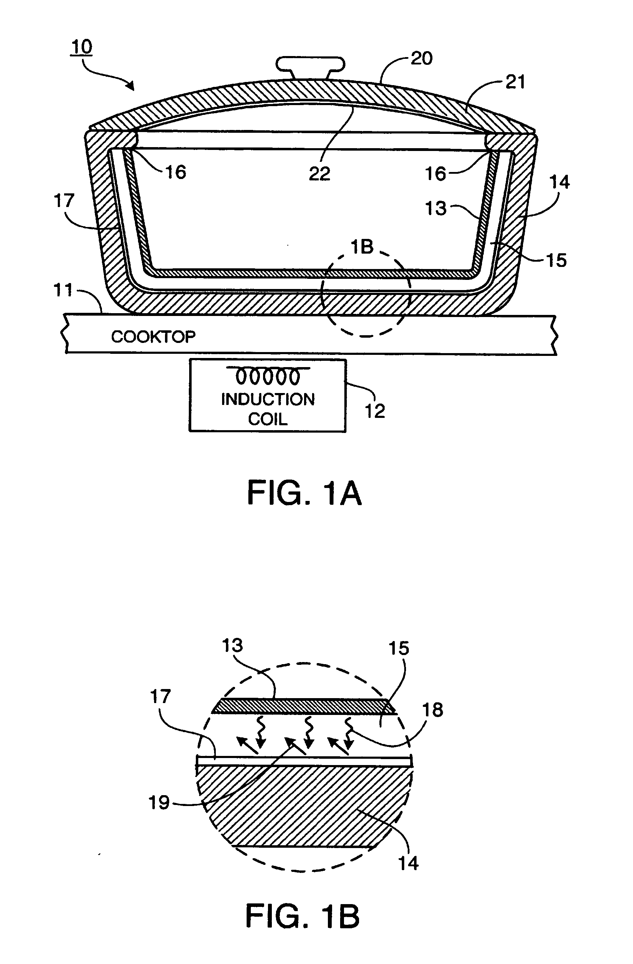

For example, as shown in FIG. 1A, a cooking utensil 10 sits on the surface 11 of an induction cooktop above the cooktop's induction coil 12. The cooking utensil 10 includes an inner wall 13 and outer wall 14 separated by a vacuum gap 15 and attached at a joint 16. A thin layer of radiant heat reflective material 17 is disposed between the inner and outer walls on the inner surface of the outer wall 14.

The inner wall 13 is the target of the induction coil 12 and is formed of an electrically conductive material, and preferably a ferromagnetic material such as 410 stainless steel. The material of the inner wall 13 may be engineered to have a particular Curie point to help prevent the inner wall 13 from exceeding a predetermined temperature (e.g., 250°C-275°C).

The outer wall 14 is designed to stay relatively cool even while the inner wall 13 (and food or liquid within the cooking utensil) is heated to high temperatures for extended periods of time. For example, the induction cooktop may heat the target material to 233°C-275°C while the outer surface of the cooking utensil 10 is maintained at about 60°C or less. The outer wall 14 is formed at least in part, of an electrically non-conductive material (e.g., an insulator having a resistivity greater than about one ohm-meter), such as glass ceramic, glass, or plastic (e.g., a plastic such as polyether sulfone resin (PES), Liquid Crystal Polymer (LCP), or Polyetheretherketone (PEEK)). For implementations that include a vacuum gap 15 between the inner and outer walls, the material of the outer wall 14 is also preferably formed of material that is impermeable to atmospheric gasses, and either inherently does not outgas, or is provided with a barrier material which prevents outgassing (to preserve the vacuum). Applications which include a vacuum gap 15 (pressures of between 0.001 and 1 torr) significantly reduce both conductive and convective heat transfer from the target surface to the outer surface.

The thin layer of reflective material 17 reflects a significant portion of the radiant heat radiated by the inner wall 13 (i.e., the target of the induction coil) away from the outer surface, thus helping to keep the outer wall 14 relatively cool. This reflective layer 17 may be formed of any electrically conductive material having a high reflectance (e.g., greater than 80% and preferably between 90-100%) and low emissivity (e.g., an emissivity less than about 0.20 and preferably around 0.01-0.04) for radiation in the infrared and visible electromagnetic spectra (e.g., radiation having a wavelength of between 0.4 µm and 1x104 µm). As shown in FIG. 1 B, heat 18 radiated from the inner wall 13 is reflected 19 by the reflective layer 17 away from the outer wall 14. This permits the cooking utensil 10 to have a thinner cross-sectional profile than would otherwise be required to maintain the temperature differential between the inner and outer walls. (A cooking utensil without the reflective layer 17 would require a larger insulation gap and/or thicker outer wall to maintain the same temperature differential). In such cases, the target is moved further away from the induction coil 12, thus increasing the energy usage of the coil 12 and reducing the coupling efficiency between the coil 12 and the target.

The reflective layer 17 will lie between the induction coil 12 and the target (as is shown in FIG. 1A), and, as such, the reflective layer 17 should be designed to prevent it from attenuating a significant portion of the magnetic field. In other words, the reflective layer 17 should be designed to be essentially invisible to the magnetic field created by the induction coil 12. In some implementations the reflective layer 17 may be formed of a conductive material such as a metal (e.g., pure or alloy forms of gold, silver, aluminum, palladium, nickel, etc.). In this case, the conductive reflective layer 17 is made thin enough to prevent it from attenuating a significant portion of the magnetic field produced by the induction coil 12. The thickness of a conductive reflective layer 17 may be designed to be less than the skin depth of the material (at the frequency of operation of the induction coil). For example, in the cooking utensil 10 example of FIGS. 1A-1B the reflective layer 17 is formed of silver and has a thickness of on the order of about 1000x10⁻¹⁰ meters (the figures including FIGS. 1A-1 B are not drawn to scale), which is about three orders of magnitude less than the skin depth of silver (approximately 3.7x10⁻⁴ meters at 30kHz). Also, some percentage of the conductive reflective layer 17 is etched away to create interruptions in the current path. Breaking the current path that would otherwise be induced in the reflective layer 17 by the field (e.g., etching a grid or other pattern in the reflective layer) allows for design of a thicker conductive reflector (e.g., reflective layers that are roughly equal to or exceeding the skin depth of the material at the induction coil frequency of operation).

The reflective layer 17 may be formed using any known technique for the particular material. Metallic reflectors may be coated on thin-film polymeric substrates such as Kapton® by E. I. du Pont de Nemours and Company, Wilmington, DE, USA, which in turn may be adhered to the outer wall 14. Additionally, evaporation coating may be used to deposit a thin layer of a metallic reflector on the inner surface of the outer wall 14.

It should be noted that the reflective layer 17 need not be attached to the outer wall 14. In some implementations, the reflective layer 17 may be disposed on the outer surface of the inner wall 13. In other implementations, the reflective layer 17 may be a separate structure disposed between the inner and outer walls; for example, a layer of thermal insulating material (e.g., aerogel) may be disposed between the inside of the outer wall 14 and the reflective layer 17.

Referring again to FIG. 1A, the cooking utensil 10 includes a lid 20 that is formed of a thermally insulating material 21 and includes a layer of reflective material 22 on its inner surface. This layer of reflective material 22 reflects heat radiated from the inside of the cooking utensil 10 away from the exterior surface of the lid 20, thus helping to keep the lid 20 cool and the chamber of the cooking utensil 10 warm.

The joint 16 between the inner and outer walls may be formed using any known joining technique (e.g., joining with a high-temperature adhesive, mechanical seal (such as an o-ring), or a brazed joint). For implementations that include a vacuum gap 15 between the inner and outer walls (such as shown in FIGS. 1A-1 B), the gap 15 between the inner and outer walls may be evacuated during the joining process, or the joining process may take place in a vacuum chamber.

In an implementation that includes a vacuum gap 15, the pressure in the gap 15 will increase over time regardless of the materials selected for the walls 13, 14 and the quality of the joint 16 due to outgassing of the bulk materials and leakage at the joint 16. Metallic and glass/glass ceramic materials will outgas very slowly, while polymeric materials will outgas relatively rapidly. As the pressure increases, the thermal resistance of the cooking utensil 10 diminishes. One technique for helping to slow the leakage of gas into a vacuum gap 15 for a polymeric material is to seal the outer wall 14 using a thin film coating such as an ultra low-outgassing epoxy or a metallic coating. In addition, however, a getter material may be disposed between the inner and outer walls to help preserve the vacuum over time (and thus also helping to maintain the cookware's thermal resistance over time).

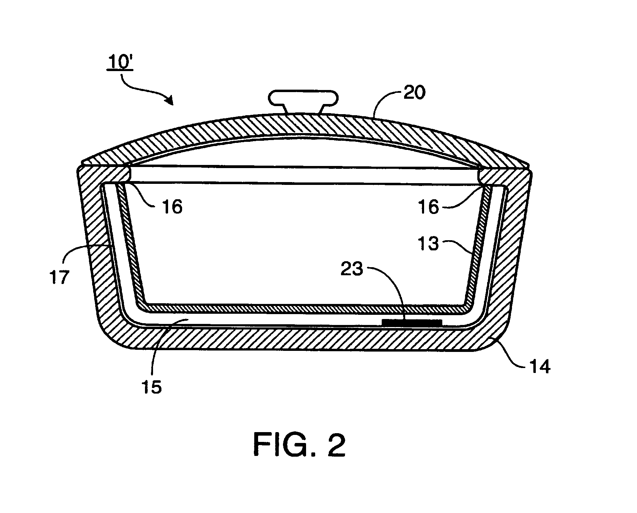

For example, as shown in FIG. 2, a cooking utensil 10' is identical in construction to the example shown and described in FIG. 1 except that it includes an amount of a getter material 23 (e.g., a Zirconium-based alloy available from SAES Getters S.p.A. in Milan, Italy (www.saesgetters.com)) attached (e.g., by welding or adhering) to the inside of the outer wall 14 in the gap 15. The getter material 23 may be pre-activated and installed into the cookware 10' in an active state, or alternatively, it may be installed in an inactive state and then activated by heating the cookware 10' after assembly. When the getter material 23 is in an active state, it will absorb gas (e.g., N₂, O₂, CO, and CO₂) that has leaked into the gap 15 between the inner and outer walls and thus preserves the vacuum.

Getter material 23 may also be used to reduce the pressure existing between the inner and outer chambers. For example, a larger amount of getter material may be placed between the inner and outer walls and then activated after the walls 13, 14 are joined to form the vacuum, however the getter will not absorb Argon gas, which is present in the atmosphere. Alternatively, the air in the gap 15 between the inner and outer walls may be evacuated during the joining process to achieve a vacuum at a certain magnitude (e.g., 1 torr) and then getter material may be activated to increase the magnitude of the vacuum (e.g., to 1x10⁻³ torr).

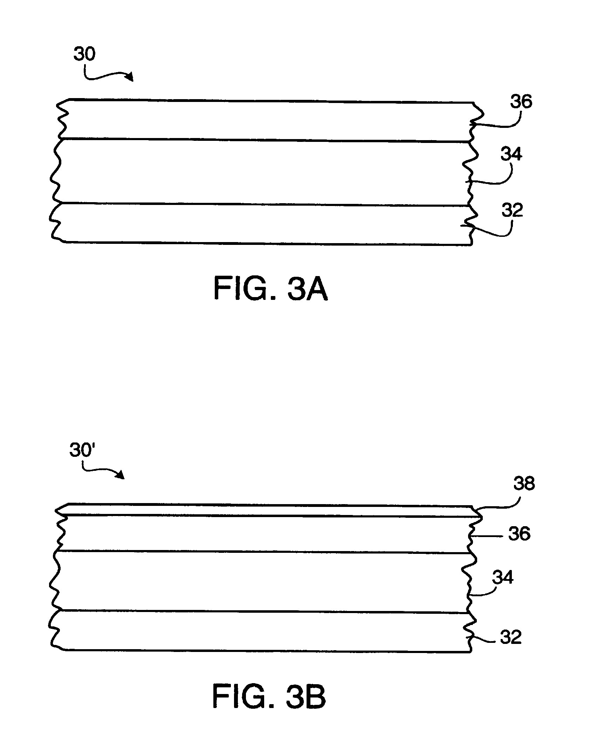

While the cookware 10, 10' illustrated thus far show single layer inner and outer walls, other implementations may use multi-layered inner and/or outer walls. For example, as shown in FIG. 3A, an inner wall of an induction cook cooking utensil 30 includes a three-layer design that includes a lower layer 32, middle layer 34, and upper layer 36. The lower layer 32 is formed of a material designed to be a good target for the induction coil 12, such as 410 stainless steel having a thickness of roughly 0.76mm. The middle layer 34 is formed of a material, such as 1060 aluminum, that effectively and evenly spreads heat generated in the target material. Finally, the upper layer 36 is formed of a material such as 305 stainless steel having a thickness of about 0.8mm. FIG. 3B shows a similar multi-layered design, except in this example, a non-stick layer 38 (e.g., PEEK available from Victrex Company in Conshohocken, PA (www.victrex.com), or Teflon® available from E. I. du Pont de Nemours and Company in Wilmington, DE (www.dupont.com)) is applied on the uppermost surface of the inner wall 36 to help prevent food and liquid from sticking to the cooking utensil 30'.

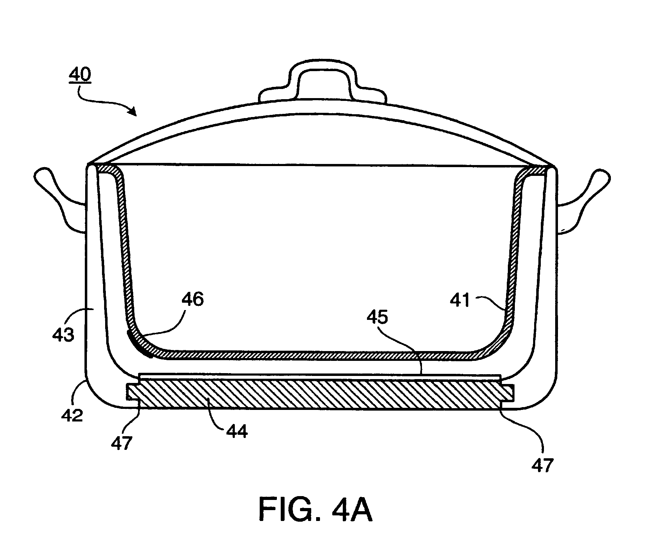

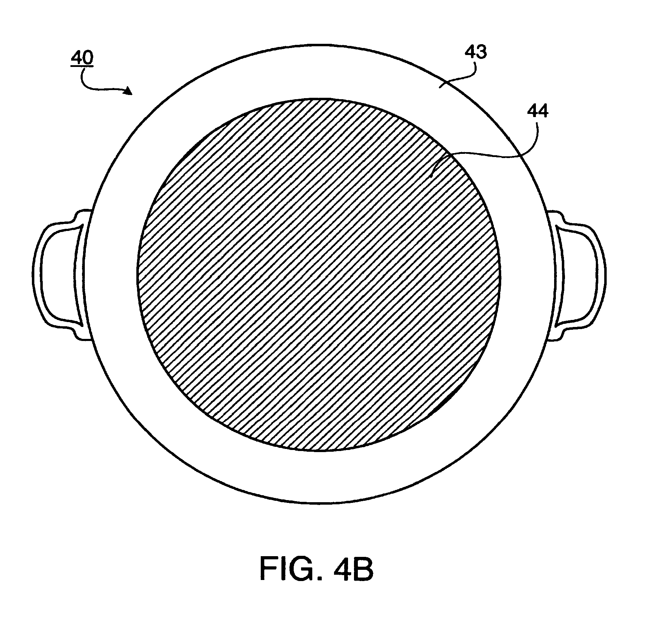

Referring now to FIGS. 4A-4B, an induction cooking utensil 40 is similar in construction to the cooking utensil 10 shown and described in FIGS. 1A-1B. However, in this example, the outer wall 42 includes a sidewall 43 formed of a metallic material and a window 44 formed of an electrically insulating material. Additionally, the reflective layer 45 is disposed only on the bottom of the cooking utensil, and not along its sidewalls 43 as is shown in FIGS. 1A-1 B. In this design, the cooking utensil 40 has the look of a conventional metallic cooking utensil, yet still has a high enough thermal resistance between the inside of the inner wall 41 and the outside of the outer wall 42 to maintain a relatively cool outer shell.

The insulating window 44 may be attached to the metallic sidewall 43 using any known technique for the materials selected, such as, brazing, insert molding, or attaching using an adhesive or a mechanical seal. The joint 47 between the insulating window 44 and metallic sidewalls 43 is preferably air-tight to preserve the vacuum. A piece of getter material 46 is also attached to the outside of the inner wall 41 to preserve the vacuum over time. Any electrically non-conductive material may be used for the window, such as glass-ceramics (e.g., Robax® or Ceran® available from Schott North America, Inc in Elmsford, NY (www.us.schott.com)), technical glasses (e.g., Pyrex® available from Corning Incorporated in Corning, NY (www.corning.com), ceramic white ware (CorningWare® available from Corning Incorporated), or plastic (e.g., PES LCP, or PEEK). In some implementations, the insulating window 44 may extend up into the sidewall portions 43 of the outer wall 42, while a metallic sidewall 43 may be attached to the outer surface of the insulating window 44 on the side of the cooking utensil 40.

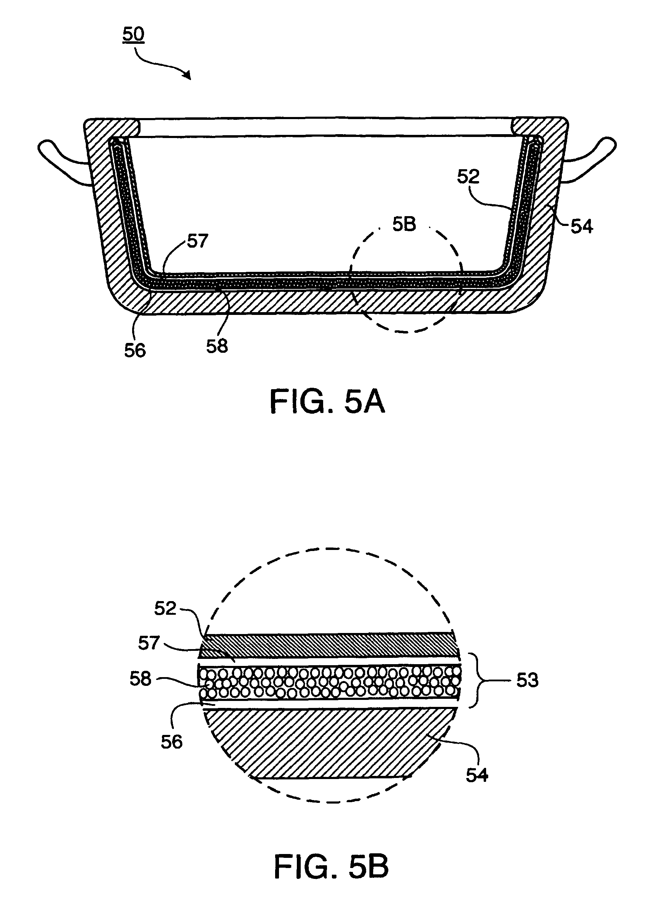

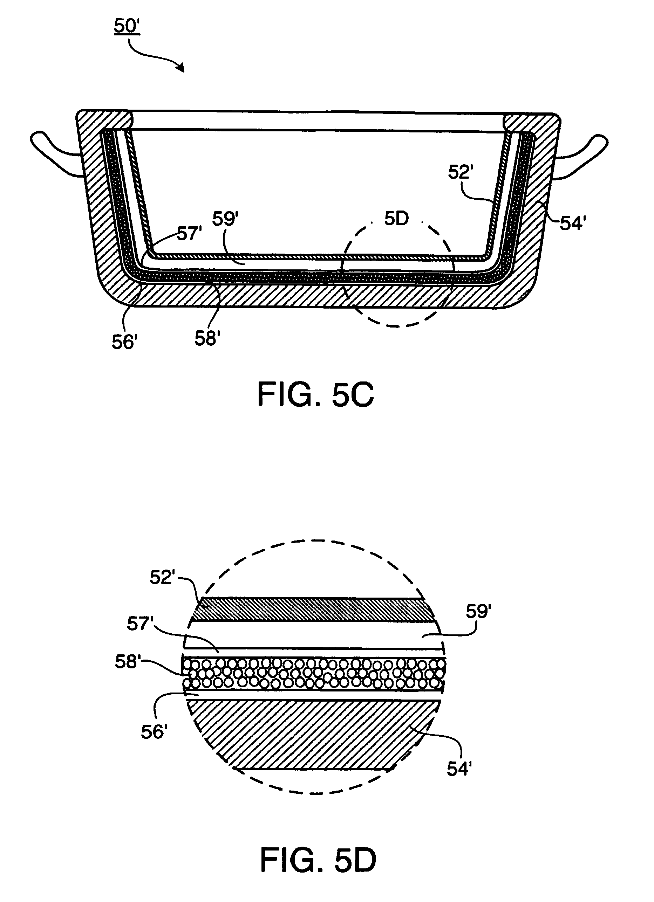

In some implementations, an induction cooking utensil may not have a vacuum gap that separates the inner and outer walls. For example, as shown in FIG. 5A-5B, an induction cooking utensil 50 includes an inner wall 52 formed of an electrically conductive material and an outer wall 54 formed of an electrically non-conductive material that is separated by a non-vacuum gap. A vacuum-sealed thermal insulator 53 is disposed within the gap and includes a thermally resistant material 58 that is vacuum-sealed between two sheets of material 56, 57. One or both of the sheets of material 56, 57 are formed of a reflective material to help reflect radiant heat away from the outer wall 54. For example, a layer of NanoporeTM thermal insulating material available from Nanopore, Inc. in Albuquerque, New Mexico (www.nanopore.com) may be used between the inner and outer walls. In other implementations, non-reflective sheets of material 56, 57 may be used to vacuum-seal the thermally insulating material 58 and one or more reflective layers may be disposed on the inside of the outer wall 54 (such as what is shown in FIG. 1A-1 B), disposed as a separate layer in the gap, and/or disposed on the outside of the inner wall 52. Also, in some implementations a vacuum-sealed member 53 may not line the entire gap separating the inner and outer walls as shown, but may line only a portion, such as the bottom portion of the utensil 50.

In another example shown in FIGS. 5C-5D, an induction cooking utensil 50' is similar in construction as to the cooking utensil 50 shown in FIGS. 5A-5B. However, in this example, there is no vacuum existing between the inner and outer walls. More particularly, the induction cooking utensil 50' includes an inner wall 52' formed of an eclectically conductive material and an outer wall 54' formed of an electrically non-conductive material that is separated by a non-vacuum gap. The gap includes a first reflective layer 56' disposed on the inner surface of the outer wall 54' and a layer of thermally resistant material 58' (such as aerogel) disposed on top of the first reflective layer 56'. A second reflective layer 57' is disposed on top of the layer of thermally resistant material 58'. In this implementation, an air gap 59' exists between the inner and outer walls above the second reflective layer 57'. Note also that this implementation includes two reflective layers. The upper reflective layer 57' reflects heat radiated from the inner wall 52' away from the outer wall 54'. The lower reflective layer 56' reflects heat radiated from inner wall 52' and the upper reflective layer 57' away from the outer wall 54'. The thermally resistant material 58' is preferably of a type that is a good thermal insulator (such as a carbon aerogel or a silica aerogel with carbon). While two layers of reflectors 56', 57' are illustrated in FIGS. 5C-5D, other implementations may use additional layers of reflectors. Similarly, some implementations may use a single reflective layer that is separate from the inner or outer wall (or both) by a layer of thermally resistant material.

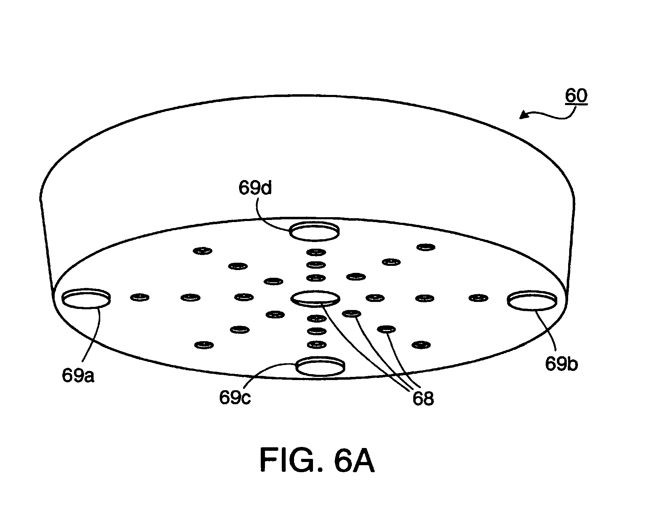

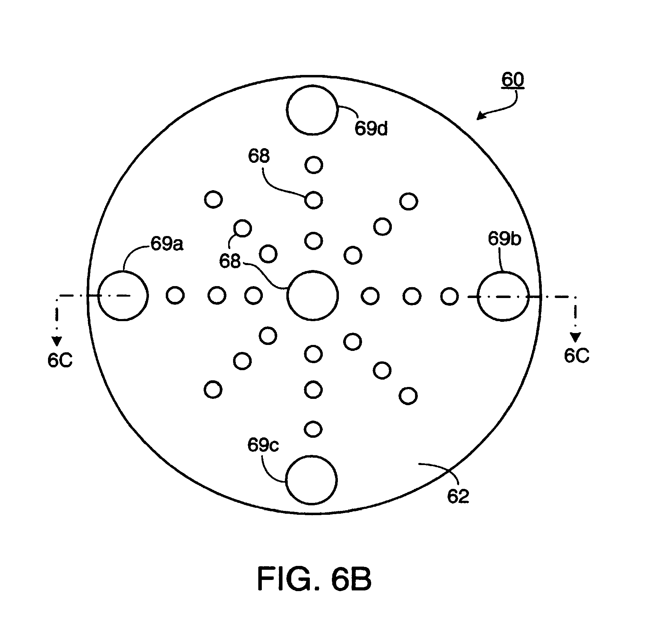

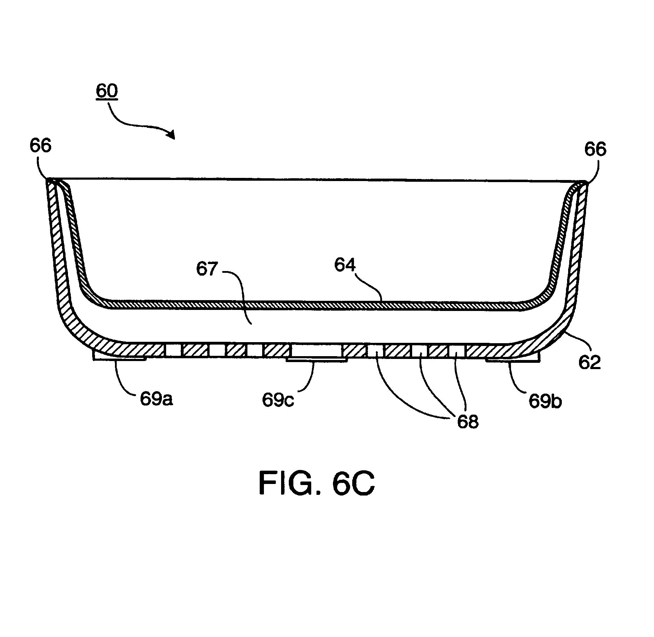

A cooking utensil may also include openings in its outer wall to promote convective cooling of the outer wall. For example, as shown in FIG. 6A-6C an induction cooking utensil 60 includes an inner wall 64 formed of an electrically conductive material and an outer wall 62 formed of an electrically non-conductive material that is attached at a joint 66. In this case, the outer wall 62 includes a number of openings 68 on its bottom surface to promote airflow through the gap 67 separating the inner and outer walls. Cooking utensil 60 also includes features 69a-69d to slightly raise the bottom of the outer wall 62 from the surface 11 of the cooktop, and thus more freely permit airflow through openings 68. The inner and outer walls may be attached at the joint 66 using any of the techniques described above. While this particular example shows openings 68 only on the bottom surface of the outer wall 62, other implementations may include openings only on the sidewall or both on the sidewall and bottom surface of the outer wall 62. Additionally, other implementations may include one or more reflective layers to further assist in keeping the outer wall 62 relatively cool. It should also be noted that features similar to features 69a-69d shown in FIG. 6A-6C may be used in any of the other implementations described herein to promote airflow between the bottom surface of the cooking utensil and the top surface 11 of the cook top.

A number of embodiments of the invention have been described. Nevertheless, it will be understood that various modifications may be made without departing from the scope of the invention, and, accordingly, other embodiments are within the scope of the following claims.

## Claims

1. A cooking utensil (10) for use with an induction cooktop (11) having an induction heating coil (12), the cooking utensil comprising:
an inner wall (13) comprising an electrically conductive material;
an outer wall (14) comprising an electrically non-conductive material configured to be positioned between the inner wall and the induction heating coil during operation of the induction heating coil; and
a reflective layer (17) positioned between the inner wall and outer wall, wherein the reflective layer comprises an electrically conductive material, **characterized in that**
breaks are formed in the conductive material of the reflective layer (17) to interrupt a path of a current flow induced in the conductive material.

2. The cooking utensil (10) of claim 1, wherein the reflective layer (17) is formed of a material having a reflectance of greater than about 80% for radiation in the infrared and visible spectrum.

3. The cooking utensil (10) of claim 1, wherein the reflective layer (17) is formed on an inner surface of the outer wall.

4. The cooking utensil (10) of claim 1, wherein the reflective layer (17) comprises a dielectric reflective material.

5. The cooking utensil (10) of claim 1, further comprising a layer of thermally insulating material (58) positioned between the inner wall (13) and outer wall (14).

6. The cooking utensil (10) of claim 5, wherein the thermally insulating material (58) comprises aerogel.

7. The cooking utensil (10) of claim 5, wherein the thermally insulating layer (58) is positioned between the reflective layer (17) and the outer wall (14).

8. The cooking utensil (10) of claim 1, further comprising a vacuum-sealed thermal insulator (53) disposed between the inner wall and outer wall.

9. The cooking utensil (10) of claim 8, wherein the reflective layer (56,57) forms a layer of the vacuum-sealed insulator (53).

10. The cooking utensil (10) of claim 1, wherein the outer wall (14) comprises an insulating material.

11. The cooking utensil (40) of claim 1, wherein the outer wall (42) comprises a bottom portion (44) and a sidewall portion (43), and further comprising a vacuum-sealed thermal insulator disposed only within the bottom portion of the cooking utensil.

12. The cooking utensil (10) of claim 1, wherein a vacuum is formed within a gap (15) between the inner (13) and outer (14) walls.

13. The cooking utensil (10') of claim 12, further comprising a getter material (23) disposed within the gap.

14. The cooking utensil (10) of claim 12, wherein the outer wall (14) is coated with a material that helps to preserve the vacuum formed in the gap.

## Patentansprüche

1. Kochutensil (10) zur Verwendung mit einer Induktionsherdplatte (11) mit einer Induktionsheizspule (12), wobei das Kochutensil Folgendes umfasst:
eine innere Wandung (13), die ein elektrisch leitendes Material umfasst,
eine äußere Wandung (14), die ein nicht elektrisch leitendes Material umfasst und die dafür gestaltet ist, während des Betriebes der Induktionsheizspule zwischen der inneren Wandung und der Induktionsheizspule angeordnet zu sein, und
eine reflektierende Schicht (17), die zwischen der inneren Wandung und der äußeren Wandung angeordnet ist, wobei die reflektierende Schicht ein elektrisch leitendes Material umfasst, **dadurch gekennzeichnet, dass**
im leitenden Material der reflektierenden Schicht (17) Unterbrechungen gebildet sind, die einen Weg eines Stromflusses unterbrechen, der im leitenden Material induziert wird.

2. Kochutensil (10) nach Anspruch 1, wobei die reflektierende Schicht (17) aus einem Material gebildet ist, das ein Reflexionsvermögen für Strahlung im Infrarot- und im sichtbaren Spektrum von mehr als ungefähr 80 % aufweist.

3. Kochutensil (10) nach Anspruch 1, wobei die reflektierende Schicht (17) auf einer inneren Oberfläche der äußeren Wandung gebildet ist.

4. Kochutensil (10) nach Anspruch 1, wobei die reflektierende Schicht (17) ein dielektrisches reflektierendes Material umfasst.

5. Kochutensil (10) nach Anspruch 1, ferner eine Schicht thermisch isolierenden Materials (58) umfassend, die zwischen der inneren Wandung (13) und der äußeren Wandung (14) angeordnet ist.

6. Kochutensil (10) nach Anspruch 5, wobei das thermisch isolierende Material (58) Aerogel umfasst.

7. Kochutensil (10) nach Anspruch 5, wobei die thermisch isolierende Schicht (58) zwischen der reflektierenden Schicht (17) und der äußeren Wandung (14) angeordnet ist.

8. Kochutensil (10) nach Anspruch 1, ferner ein vakuumversiegeltes Thermoisolationsmittel (53) umfassend, das zwischen der inneren Wandung und der äußeren Wandung angeordnet ist.

9. Kochutensil (10) nach Anspruch 8, wobei die reflektierende Schicht (56, 57) eine Schicht des vakuumversiegelten Isolationsmittels (53) bildet.

10. Kochutensil (10) nach Anspruch 1, wobei die äußere Wandung (14) ein Isolationsmaterial umfasst.

11. Kochutensil (40) nach Anspruch 1, wobei die äußere Wandung (42) einen Bodenabschnitt (44) und einen Seitenwandungsabschnitt (43) umfasst und ferner ein vakuumversiegeltes Thermoisolationsmittel umfasst, das nur im Bodenabschnitt des Kochutensils angeordnet ist.

12. Kochutensil (10) nach Anspruch 1, wobei in einem Spalt (15) zwischen der inneren (13) und der äußeren (14) Wandung ein Vakuum gebildet ist.

13. Kochutensil (10') nach Anspruch 12, ferner ein Gettermaterial (23) umfassend, das im Spalt angeordnet ist.

14. Kochutensil (10) nach Anspruch 12, wobei die äußere Wandung (14) mit einem Material beschichtet ist, das die Erhaltung des im Spalt gebildeten Vakuums unterstützt.

## Revendications

1. Ustensile de cuisine (10) destiné à être utilisé avec une plaque de cuisson à induction (11) ayant une bobine de chauffage par induction (12), l'ustensile de cuisine comprenant :
une paroi interne (13) comprenant un matériau électriquement conducteur ;
une paroi externe (14) comprenant un matériau non électriquement conducteur configuré pour être positionné entre la paroi interne et la bobine de chauffage par induction durant le fonctionnement de la bobine de chauffage par induction ; et
une couche réfléchissante (17) positionnée entre la paroi interne et la paroi externe, la couche réfléchissante comprenant un matériau électriquement conducteur, **caractérisée en ce que**
des cassures sont formées dans le matériau conducteur de la couche réfléchissante (17) afin d'interrompre un chemin d'un flux de courant induit dans le matériau conducteur.

2. Ustensile de cuisine (10) selon la revendication 1, dans lequel la couche réfléchissante (17) est formée en un matériau ayant un pouvoir de réflexion supérieur à environ 80% pour un rayonnement dans les spectres infrarouge et visible.

3. Ustensile de cuisine (10) selon la revendication 1, dans lequel la couche réfléchissante (17) est formée sur une surface interne de la paroi externe.

4. Ustensile de cuisine (10) selon la revendication 1, dans lequel la couche réfléchissante (17) comprend un matériau réfléchissant diélectrique.

5. Ustensile de cuisine (10) selon la revendication 1, comprenant en outre une couche de matériau thermiquement isolant (58) positionnée entre la paroi interne (13) et la paroi externe (14).

6. Ustensile de cuisine (10) selon la revendication 5, dans lequel le matériau thermiquement isolant (58) comprend un aérogel.

7. Ustensile de cuisine (10) selon la revendication 5, dans lequel la couche thermiquement isolante (58) est positionnée entre la couche réfléchissante (17) et la paroi externe (14).

8. Ustensile de cuisine (10) selon la revendication 1, comprenant en outre un isolant thermique scellé sous vide (53) disposé entre la paroi interne et la paroi externe.

9. Ustensile de cuisine (10) selon la revendication 8, dans lequel la couche réfléchissante (56, 57) forme une couche de l'isolant scellé sous vide (53).

10. Ustensile de cuisine (10) selon la revendication 1, dans lequel la paroi externe (14) comprend un matériau isolant.

11. Ustensile de cuisine (40) selon la revendication 1, dans lequel la paroi externe (42) comprend une partie inférieure (44) et une partie latérale (43) et comprenant en outre un isolant thermique scellé sous vide disposé uniquement dans la partie inférieure de l'ustensile de cuisine.

12. Ustensile de cuisine (10) selon la revendication 1, dans lequel un vide est formé dans un espace (15) entre les parois interne (13) et externe (14).

13. Ustensile de cuisine (10') selon la revendication 12, comprenant en outre un matériau getter (23) disposé dans l'espace.

14. Ustensile de cuisine (10) selon la revendication 12, dans lequel la paroi externe (14) est revêtue d'un matériau qui aide à préserver le vide formé dans l'espace.
